# EUROPÄISCHE PATENTSCHRIFT

(11) **EP 0 849 164 B1**
(45) Veröffentlichungstag und Bekanntmachung des Hinweises auf die Patenterteilung: **30.10.2002**
(21) Anmeldenummer: 97120674.3
(22) Anmeldetag: 26.11.1997
(51) Int. Cl.: B64C 1/12, E04C 2/24, B32B 3/12, E04B 1/86

(54) **Wandelement**
Wall element
Elément de paroi

(30) Priorität: 21.12.1996 DE 19653850
(43) Veröffentlichungstag der Anmeldung: 24.06.1998
(73) Patentinhaber: Airbus Deutschland GmbH, 21129 Hamburg (DE)
(72) Erfinder: Boock, Klaus, 23714 Timmdorf (DE)
(74) Vertreter: Hansmann, Dierk, Dipl.-Ing.

(56) Entgegenhaltungen:
- EP-A- 0 341 057
- DE-A- 4 137 706
- GB-A- 1 579 897
- US-A- 4 317 503
- US-A- 5 493 081

## Beschreibung

Die Erfindung bezieht sich auf ein Wandelement, insbesondere für die Innenverkleidung von Flugzeugkabinen.

Bisherige Wandelemente dieser Art bestehen im wesentlichen aus Leichtbauverbundplatten mit einem Wabenkern, wobei die äußeren Deckschichten der Verbundplatten durch Laminate aus faserverstärktem Kunststoff gebildet sind. Dabei sind die sichtbaren Flächen der Wandelemente mit einer an sich akustisch neutralen Dekorschicht meist in Form einer farblich gestalteten Strukturfolie versehen. Bei Flugzeugkabinen, die mit derartigen Wandelementen ausgestattet sind, wird ein wesentlicher Teil des Kabineninnengeräusches dadurch verursacht, daß der innerhalb der Rumpfstruktur vorhandene Körperschall über die Wandelemente abgestrahlt wird. Hierbei wird der Körperschall von der Struktur über die Befestigungspunkte der Wandelemente in diese eingeleitet und über deren Oberfläche, quasi wie mit einer Membran, in die Kabine abgestrahlt. Versuche, diese Wirkung durch Maßnahmen an den Befestigungspunkten zu mildern, sind wenig erfolgreich, da sie sich kaum auf den entscheidenden Frequenzbereich auswirken.

Außerdem wird in den Figuren 1 und 2 der DE 41 37 706 A1 eine schallabsorbierende Wärmeisolierung für insbesondere Kraftfahrzeuge vorgestellt, deren Aufbau auch Elemente umfasst, die von einem Wandelement berücksichtigt werden. Dieser Aufbau umfasst auch eine biegesteife Leichtbauverbundplatte mit Deckschichten, wobei die Leichtbauverbundplatte quer zu ihrer Flächenerstreckung luftdurchlässig ausgebildet ist. Weiter ist mindestens einer der Deckschichten eine luftundurchlässige biegeweiche dekorative Außenschicht zugeordnet, die mit der betreffenden Deckschicht einen Zwischenraum einschließt und mit der Deckschicht verbunden ist. Etwaige Hinweise oder Anregungen, aus denen sich eine Vermeidung von aufwendigen Befestigungselementen, beispielsweise mit elastischen Gummifederelementen, zur Anbringung eines Wandelementes entnehmen lässt, werden nicht gegeben.

Demgemäß liegt der Erfindung die Aufgabe zugrunde, ein gattungsgemäßes Wandelement, basierend auf einer Leichtbauverbundplatte, derart auszubilden, dass aufwendige Befestigungselemente, beispielsweise mit elastischen Gummielementen, zur Anbringung des Wandelementes vermieden werden und seine Schallabstrahlung wesentlich reduziert wird.

Diese Aufgabe wird durch die im Anspruch 1 angegebenen Maßnahmen gelöst. In den weiteren Ansprüchen sind zweckmäßige Weiterbildungen und Ausgestaltungen dieser Maßnahmen angegeben.

Die Erfindung ist anhand der Zeichnung dargestellt und nachfolgend näher erläutert. Es zeigen
- Fig. 1: einen Schnitt durch ein Wandelement und
- Fig. 2: ein Diagramm mit Meßergebnissen.

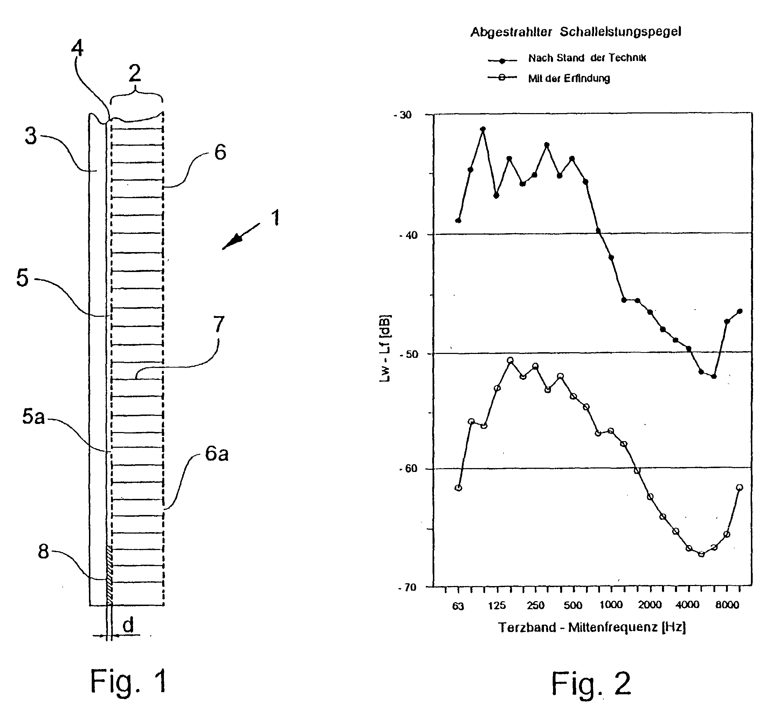

Figur 1 zeigt einen Schnitt durch ein erfindungsgemäßes Wandelement 1, bestehend aus einer biegesteifen Leichtbauverbundplatte 2 mit zwei Deckschichten 5 und 6. Dabei ist vorgesehen, daß die Deckschichten 5 und 6 Öffnungen 5a und 6a aufweisen, so daß sie quer zu ihrer Flächenerstreckung luftdurchlässig ausgebildet sind. Dabei ist mindestens einer der Deckschichten 5, 6 eine luftundurchlässige biegeweiche dekorative Außenschicht 3 zugeordnet, die mit der betreffenden Deckschicht 5, 6 einen Zwischenraum 4 einschließt und vorzugsweise in ihrem Randbereich mit der Deckschicht 5, 6 verbunden ist. In der gezeigten Ausgestaltung besteht die Leichtbauverbundplatte 2 aus einem Wabenkern 7, der die Deckschichten 5, 6 trägt, wobei sich die Luftdurchlässigkeit des Kerns durch die Wabenform ergibt. Um die besagte Luftdurchlässigkeit bezüglich der Deckschichten 5, 6 sicherzustellen, sind diese aus sogenannten Lochprepregs gebildet. Der untere Teil des Bildes zeigt den Randbereich des Wandelementes 1, in dem die Außenschicht 3 mittels eines Zwischenelementes 8 mit der Dicke d mit der Deckschicht 5 verbunden ist. Dabei ergibt sich die Dicke des Zwischenbereiches 4 aus der Dicke d des Zwischenelementes 8, so daß die Außenschicht 3 der Deckschicht 5 im Abstand der Dicke d berührungslos gegenüberliegt. Im eingebauten Zustand ist das Wandelement 1 an hier nicht gezeigten Befestigungspunkten mit der Struktur des Flugzeuges fest verbunden. Wird nun ein Körperschall von der Struktur her in das Wandelement 1 eingeleitet, so führt die Leichtbauverbundplatte 2 zwar die entsprechenden schnellen Biegeschwingungen aus, strahlt aber infolge der Luftdurchlässigkeit kaum Luftschall ab. Infolge der Luftdurchlässigkeit der Leichtbauverbundplatte 2 besteht hier ein hydrodynamischer Kurzschluß. Hierdurch kann die Luft, die die Platte umgibt, der Kompression und Dekompression durch Ausweichen in die Löcher entgehen, so daß nur ein geringes Maß an Luftschall von der Platte abgestrahlt wird. Bevor dieser Schall in die Kabine gelangen kann, muß er den Zwischenbereich 4 und die Außenschicht 3 überwinden. Letztere wirkt dabei aufgrund ihrer Beschaffenheit als weiteres Dämpfungsglied für den Schall, so daß es insgesamt zu einer erheblichen Abnahme des abgestrahlten Schalls kommt.

Die vorbeschriebene Ausgestaltung mit einer Außenschicht 3 ist geeignet für Wand- oder Deckenverkleidungen. Eine andere Ausgestaltung der Erfindung, wobei die Leichtbauverbundplatte 2 beidseitig mit einer Außenschicht 3 versehen ist, eignet sich besonders zur Herstellung von Kabinentrennwänden.

Als Zwischenelement 8 kann beispielsweise eine am Rande der Platte 2 verlaufende Leiste verwendet werden, die mit der Leichtbauverbundplatte 2 und der Außenschicht 3 durch Kleben verbunden ist. In dieser Ausgestaltung besteht ein Schallkontakt zwischen der Platte 2 und der Außenschicht nur am Rande der Platte, so daß die Äußenschicht praktisch frei schwingen kann.

Aufgrund ihrer Biegeweichheit kann die Außenschicht 3 bei Schallanregung nur extrem langsame Biegeschwingungen ausführen, die selbst keine störende Schallabstrahlung bewirken.

Eine besonders einfache Lösung ergibt sich, wenn anstelle einer Leiste ein doppelseitiges Klebeband von entsprechender Dicke verwendet wird.

Eine andere Ausgestaltung fder Erfindung besteht darin, daß als Zwischenelement 8 ein Klebstoff verwendet wird. Infolge der geringen Dicke der betreffenden Klebstoffschicht liegt dann die Außenschicht 3 praktisch direkt an der Leichtbauverbundplatte 2 an. Der hierdurch gegenüber einer frei schwingenden Außenschicht 3 zu erwartende Rückgang der Schalldämpfung ist minimal.

Eine weitere Ausgestaltung der Erfindung besteht darin, daß der Zwischenraum 4 durch einen sehr weichen offenporigen Kunststoffschaum ausgefüllt ist. Dieser Kunststoffschaum wird zweckmäßig als dünne Matte zwischen der Leichtbauverbundplatte 2 und der Außenschicht 3 eingefügt und durch Kleben mit diesen verbunden. Auch hierbei tritt eine gegenüber der frei schwingenden Außenschicht reduzierte Schalldämpfung auf, die jedoch ebenfalls als minimal einzustufen ist.

Als zu verwendende Materialien kommen alle fachüblichen Werkstoffe bzw. Halbzeuge in Betracht, wenn sie nur die erforderlichen Eigenschaften aufweisen. So können die Deckschichten 5, 6 durch sogenannte Gitterprepregs auf der Basis von Kohle- und/oder Glasfasern gebildet werden. Anstelle eines Wabenkemes kann auch ein Kern mit einer Röhrchenstruktur oder ein Kern aus einem Hartschaum verwendet werden. Während sich die Luftdurchlässigkeit in Querrichtung zur Platte im Falle eines Röhrchenkernes analog zum Wabenkem quasi von selbst ergibt, ist ein entsprechender Hartschaumkern offenporig auszubilden.

Fig. 2 zeigt ein Diagramm mit Meßergebnissen, in dem die Schallabstrahlung eines bisherigen mit der eines erfindungsgemäßen Wandelementes 1 verglichen wird. Beide Wandelemente wurden auf einem Shaker mit dem gleichen Kraftspektrum angeregt. Dabei ergab sich über den gesamten Frequenzbereich eine Reduktion der Schallabstrahlung von mindestens 10 bis 20 dB.

## Patentansprüche

1. Wandelement, bestehend aus einer biegesteifen Leichtbauverbundplatte (2) mit zwei Deckschichten (5, 6), wobei die Leichtbauverbundplatte (2) quer zu ihrer Flächenerstreckung luftdurchlässig ausgebildet ist, bei dem mindestens einer der Deckschichten (5, 6) eine luftundurchlässige biegeweiche dekorative Außenschicht (3) zugeordnet ist, die mit der betreffenden Deckschicht (5, 6) einen Zwischenraum (4) einschließt, **dadurch gekennzeichnet, daß** die dekorative Außenschicht (3) mit der betreffenden Deckschicht (5, 6) nur in ihrem Randbereich verbunden ist.

2. Wandelement, nach Anspruch 1, **dadurch gekennzeichnet, daß** ein Zwischenelement (8), das mit dem Randbereich der betreffenden Deckschicht (5, 6) und der dekorativen Außenschicht (3) durch Kleben verbunden ist, eine am Rande der Leichtbauverbundplatte (2) verlaufende Leiste ist.

3. Wandelement, nach Anspruch 2, **dadurch gekennzeichnet, daß** das Zwischenelement (8) ein doppelseitiges Klebeband ist.

4. Wandelement, nach Anspruch 2, **dadurch gekennzeichnet, daß** das Zwischenelement (8) mit einem Klebstoff realisiert ist.

5. **Wandelement,** nach Anspruch 1, **dadurch gekennzeichnet, daß** der Zwischenraum (4) durch einen weichen offenporigen Kunststoffschaum, der zwischen der Leichtbauverbundplatte (2) und der dekorativen Außenschicht (3) eingefügt und durch Kleben mit diesem verbunden ist, ausgefüllt ist.

## Claims

1. Wall element, consisting of a flexurally rigid lightweight composite sheet (2) with two surface coatings (5, 6), wherein the lightweight composite sheet (2) is constructed so as to be permeable to air at right angles to its surface extension, and in which there is assigned to at least one of the surface coatings (5, 6) an airtight flexible decorative outer coating (3) which encloses with the relative surface coating (5, 6) an intervening space (4), **characterised in that** the decorative outer coating (3) is connected to the relative surface coating (5, 6) only in its edge area.

2. Wall element according to claim 1, **characterised in that** an intermediate element (8), which is connected to the edge area of the relative surface coating (5, 6) and the decorative outer coating (3) by bonding, is a strip formed at the edge of the lightweight composite sheet (2).

3. Wall element according to claim 2, **characterised in that** the intermediate element (8) is a double-sided adhesive tape.

4. Wall element according to claim 2, **characterised in that** the intermediate element (8) is brought about with an adhesive.

5. Wall element according to claim 1, **characterised in that** the intervening space (4) is filled with a soft open-cell plastics foam, which is introduced between the light-weight composite sheet (2) and the decorative outer layer (3) and connected to the latter by bonding.

## Revendications

1. **Elément de paroi** constitué d'une plaque mixte (2) à double couche de recouvrement (5, 6), la plaque mixte (2) étant perméable à l'air, transversalement par rapport à son extension superficielle, une couche externe (3) décorative, flexible et imperméable à l'air étant raccordée à au moins une des couches de recouvrement (5, 6), ladite couche externe déterminant avec la couche de recouvrement (5, 6) un espace intermédiaire (4), et **caractérisé en ce que** la couche externe décorative (3) n'est raccordé à la couche de recouvrement (5,6) que dans son segment marginal.

2. **Elément de paroi** selon la revendication 1, **caractérisé en ce que** un élément intermédiaire (8) relié par collage au segment marginal de la couche de recouvrement (5,6) et de la couche externe (3) décorative est un listeau s'étendant en bordure de la plaque mixte (2).

3. **Elément de paroi** selon la revendication 2, **caractérisé en ce que** l'élément intermédiaire (8) est une bande adhésive à double face.

4. **Elément de paroi** selon la revendication 2, **caractérisé en ce que** l'élément intermédiaire (8) est constitué d'une matière adhésive.

5. **Elément de paroi** selon la revendication 1, **caractérisé en ce que** l'espace intermédiaire (4) est rempli par une matière synthétique souple à alvéoles ouverts insérée entre la plaque mixte (2) et la couche externe décorative (3) et reliée à ladite couche externe, par collage.
